(19) **Europäisches Patentamt / European Patent Office / Office européen des brevets**

(11) **EP 2 113 796 A1**

(12) # EUROPEAN PATENT APPLICATION

(43) Date of publication:
   **04.11.2009 Bulletin 2009/45**

(51) Int Cl.:
   **G01V 11/00** *(2006.01)*

(21) Application number: **08155476.8**

(22) Date of filing: **30.04.2008**

<table>
<tr><td>

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(71) Applicant: **ExxonMobil Upstream Research Company**
   **Houston, TX 77098-2189 (US)**

(72) Inventor: **The designation of the inventor has not yet been filed**

</td><td>

(74) Representative: **Pols, Ronald Maarten**
   **ExxonMobil Chemical Europe Inc.**
   **IP Law Shared Services**
   **P.O. Box 105**
   **Hermeslaan 2**
   **1831 Machelen (BE)**

Remarks:
   Claim 16 is deemed to be abandoned due to non-payment of the claims fee (Rule 45(3) EPC).

</td></tr>
</table>

(54) **Method and Apparatus for Analyzing Three-Dimensional Data**

(57)    A method and apparatus for segmenting geobodies extracted from three-dimensional geophysical survey data volumes. In one embodiment, the invention involves (a) obtaining a plurality of data elements, respectively corresponding to three-dimensional locations in a subsurface region, and generating a data volume consisting of discrete cells from the plurality of data elements (**1**); (b) identifying an initial geobody corresponding to a potential hydrocarbon reservoir within the data volume by grouping cells in the data volume according to a selected connectivity criterion (**2**); (c) selecting a rule (**3**) that characterizes stratigrapically reasonable geobodies (e.g. they cannot vertically overlap); and (d) in response to a determination that the initial geobody does not conform to the rule, segmenting the initial geobody into a plurality of fundamental geobodies via processing the data elements with an automated segmentation routine, wherein the fundamental geobodies each conform to the rule (**4**).

*Fig. 1*

**Description**

FIELD

The following relates generally to analyzing and interpreting three-dimensional data in connection with seismic prospecting for petroleum, and more specifically to segmentation of complex three-dimensional bodies arising from seed detection in a data volume.

BRIEF DESCRIPTION OF THE DRAWINGS

Figure 1 is a functional block diagram of an exemplary embodiment of a system for acquiring geological information from a three-dimensional ("3D") seismic survey, identifying and segmenting geobodies in the acquired information, and beneficially managing a petroleum operation.

Figure 2 is a flowchart of an exemplary embodiment of a process for segmenting geobodies extracted from three-dimensional seismic surveys.

Figures 3A-3H, collectively Figure 3, are illustrations depicting certain steps or aspects of an exemplary embodiment of the process of Figure 2.

Figure 4 is a flowchart of another exemplary embodiment of a process for segmenting geobodies extracted from three-dimensional seismic surveys.

Figure 5 is an illustration depicting certain steps or aspects of an exemplary embodiment of the process of Figure 4.

Figure 6 is an illustration depicting certain steps or aspects of an exemplary embodiment of the process of Figure 4.

Figure 7 is an illustration depicting segmenting geobodies in accordance with an exemplary embodiment of the process of Figure 4.

Figure 8 is an illustration depicting segmenting geobodies in accordance with an exemplary embodiment of the process of Figure 4.

Figure 9 is an illustration of a final segmented body resulting from an automated segmenting process in accordance with an exemplary embodiment of the process of Figure 4.

Figure 10 is an illustration showing a complex geobody broken into non-overlapping clusters using a hierarchical clustering technique in accordance with an exemplary embodiment of the process of Figure 4.

Figure 11 is a flow chart showing basic steps in the present inventive method.

The elements and features shown in the drawings are not to scale, emphasis instead being placed upon clearly illustrating the principles of exemplary embodiments. Moreover, certain dimensions may be exaggerated to help visually convey such principles. In the drawings, reference numerals designate like or corresponding, but not necessarily identical, elements throughout the several views.

SUMMARY

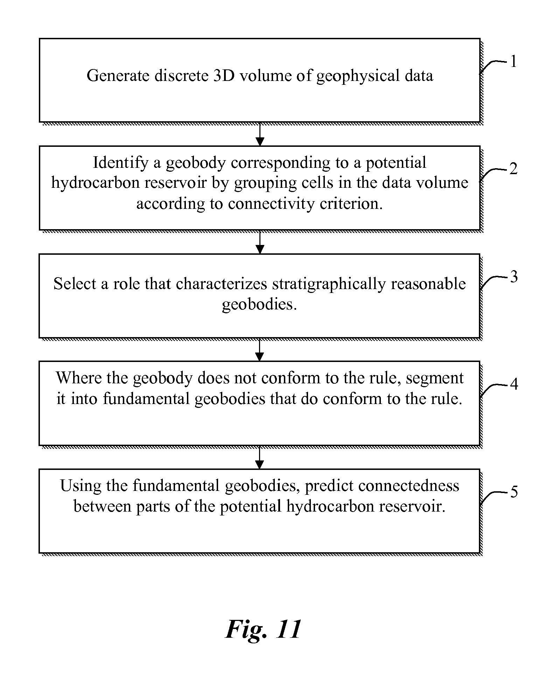

In one general aspect, with reference to the exemplary flowchart of Figure 11, an oil and gas prospecting method for predicting connectedness between parts of a potential hydrocarbon reservoir identified in a geophysical data volume corresponding to a subsurface region, includes:

(Step 1) obtaining a plurality of data elements, respectively corresponding to three-dimensional locations in the subsurface region, and generating a data volume consisting of discrete cells from the plurality of data elements;

(Step 2) identifying an initial geobody corresponding to a potential hydrocarbon reservoir within the data volume by grouping cells in the data volume according to a selected connectivity criterion;

(Step 3) selecting a rule that characterizes stratigraphically reasonable geobodies;

(Step 4) in response to a determination that the initial geobody does not conform to the rule, segmenting the initial geobody into a plurality of fundamental geobodies via processing the data elements with an automated segmentation routine, wherein the fundamental geobodies each conform to the rule; and

(Step 5) using the fundamental geobodies to predict connectedness between parts of the potential hydrocarbon reservoir.

Implementations of this aspect may include one or more of the following features. For example, in many embodiments of the invention, the selected rule is that a geobody may not overlap itself in the vertical dimension. The geophysical data are seismic data or seismic attribute data. The method includes determining if the initial geobody does not conform to the rule. After a determination that the initial geobody does not conform to the rule but before segmenting,

selecting a threshold considered to approximate noise levels in the data, then identifying the cells that are responsible for the initial geobody's nonconformance to the selected rule, then adjusting the initial geobody by removing any such cells having data values below the selected noise-related threshold, then repeating the determination of whether the initial geobody, after said adjustment, conforms to the rule. The rule is a lateral bifurcation criterion, whereby a criterion is selected limiting geobody branching in a horizontal dimension. The rule is a law of superposition, limiting the extent to which a geobody may overlap itself in the vertical dimension, wherein two cells in a geobody are considered to overlap if they have the same horizontal coordinates and are separated vertically by at least one cell not in the geobody.

Implementations of this aspect may include one or more of the following features. The automated segmentation routine uses a shortest path search algorithm. Segmenting the initial geobody into a plurality of fundamental geobodies includes (i)

identifying all zones of overlapping cells within the initial geobody; (ii) identifying all cells within the potential geobody where overlap is generated by vertical branching, and designating such cells as barrier cells for shortest path searches in subsequent steps; (iii) for each pair of cells lying one each in overlapping zones, using a shortest path search algorithm to find the shortest path between the pair of cells, and finding the cell of steepest slope for each shortest path and designating it as a barrier cell; (iv) repeating step (iii), observing barrier cells, until there are no longer any paths between any overlapping zones; and (v) segmenting the initial geobody into two or more fundamental geobodies using the designated barrier cells as boundaries. The shortest path search algorithm is the A* algorithm. The automated segmentation routine uses a 3D network of boundaries developed by performing statistical clustering analysis on the initial geobody. The automated segmentation routine uses a shortest path search algorithm to find shortest paths between pairs of at least partially overlapping clusters within the initial geobody. The geophysical data are seismic data or seismic attribute data, and segmenting the initial geobody into a plurality of fundamental geobodies comprises: clustering cells in the potential geobody based on positional data or seismic attribute data or a combination thereof, forming a plurality of non-overlapping clusters which are identified as fundamental geobodies. Segmenting the initial geobody into a plurality of fundamental geobodies further includes (i) performing statistical clustering using one or more selected spatial or attribute criteria until no individual cluster violates the selected rule for stratigraphic reasonableness; (ii) identifying number and spatial locations of all clusters using one or more selected connectivity criteria; (iii) detecting all possible pairs of clusters that do not conform to the selected rule for stratigraphical reasonableness; (iv) selecting a pair of clusters that do not conform to the rule and applying an A* shortest path algorithm to identify a shortest path between the selected pair of clusters; (v) identifying a location of maximum change where the shortest path crosses a boundary between adjacent clusters and designating all cells having the same horizontal coordinates as that location as a barrier cell set throughout the thickness of the initial geobody; (vi) repeating steps (iv) and (v) until there are no longer any possible paths between the selected pair of clusters; (vii) repeating steps (iii) through (vi) until there are no longer any cluster pairs that violate the selected rule; and (vii) segmenting the initial geobody into two or more fundamental geobodies using the designated barrier cells. The statistical clustering analysis is k-means clustering, hierarchical divisive clustering, or hierarchical agglomerative clustering. Development of the potential hydrocarbon reservoir can be planned using connectivity assumptions based on the fundamental geobodies.

In another general aspect, an oil and gas prospecting method for predicting connectedness between parts of a potential hydrocarbon reservoir identified in a geophysical data volume corresponding to a subsurface region, includes (a) obtaining a seismic or seismic attribute data volume of discrete cells, said data volume representing the subsurface region, and identifying an initial geobody corresponding to a potential hydrocarbon reservoir within the data volume by grouping cells in the data volume according to a selected connectivity criterion based on data changes from cell to cell. (B) In response to a determination that the initial geobody contains vertically overlapping regions, the shortest path is found between a selected pair of vertically overlapping regions. (c) The shortest path is broken at its steepest vertical gradient by creating barrier cells or by removal of cells from the initial geobody. In step (d), (b) and (c) are repeated, honoring the barriers until no path exists between the selected pair of overlapping regions. In step (e), (b) through (d) are repeated for all remaining pairs of vertically overlapping regions. (f) the initial geobody is segmented into fundamental geobodies according to barrier cells and removed cells. (g) The fundamental geobodies are used to predict connectedness between parts of the potential hydrocarbon reservoir.

Implementations of this aspect may include one or more of the following features. For example, the shortest path is found using the A* search algorithm.

In another general aspect, a method of producing hydrocarbons from a reservoir in a subsurface region, includes (a) obtaining a seismic or seismic attribute data volume representing the subsurface region, wherein an initial geobody is identified, using an assumed connectivity criterion, as corresponding to a potential hydrocarbon reservoir, said initial geobody containing portions overlapping other portions in the vertical dimension. (B) a processed version of the data volume is obtained wherein the initial geobody is segmented into two or more fundamental, non-self-overlapping geobodies, said segmentation having been performed by steps comprising: (i) using a shortest path search algorithm, finding all possible shortest paths between portions of vertically overlapping regions in the initial geobody; (ii) breaking the shortest paths by creating barrier cells or by removal of cells from the initial geobody; (iii) segmenting the initial geobody into fundamental geobodies according to barrier cells and removed cells. (C) The fundamental geobodies are used to predict connectedness between parts of the potential hydrocarbon reservoir. (D) Hydrocarbons are produced from the subsurface region using the connectedness predictions to plan reservoir development.

In another general aspect, an oil and gas prospecting method for predicting connectedness between parts of a potential hydrocarbon reservoir identified in a geophysical data volume corresponding to a subsurface region, includes representing the subsurface region as a plurality of voxels; associating a respective data sample with each of the plurality of voxels; identifying an initial geobody in the subsurface region via aggregating selected ones of the plurality of voxels; segmenting the initial geobody into a plurality of fundamental geobodies via hierarchical processing; and using the fundamental geobodies to predict connectedness between parts of the potential hydrocarbon reservoir.

Implementations of this aspect may include one or more of the following features. For example, segmenting the initial geobody into the plurality of fundamental geobodies bodies via hierarchical processing includes (a) initially treating each voxel as a cluster; (b) selecting a first cluster; (c) selecting a cluster distance metric; (d) determining the closest cluster to the first cluster, using the distance metric, and merging that cluster with the first cluster to form a single cluster; and (e) repeating steps (b)-(d) until all voxels belong to a single cluster. Segmenting the initial geobody into the plurality of fundamental geobodies via hierarchical processing further comprises recording the clusters merged at each step (d) and the distance between them as determined by the cluster distance metric. Each of the determined distances has at least four dimensional components. Each of the determined distances depends upon a parameter derived from a signal that has interacted with the subsurface region.

In another general aspect, an oil and gas prospecting system for predicting connectedness between parts of a potential hydrocarbon reservoir identified in a geophysical data volume corresponding to a subsurface region, includes means for representing the subsurface region as a plurality of voxels; means for associating a respective data sample with each of the plurality of voxels; means for identifying an initial geobody in the subsurface region via aggregating selected ones of the plurality of voxels; means for segmenting the initial geobody into a plurality of fundamental geobodies via hierarchical processing; and means for using the fundamental geobodies to predict connectedness between parts of the potential hydrocarbon reservoir.

Implementations of this aspect may include one or more of the following features. The means for segmenting the initial geobody into the plurality of fundamental geobodies comprises a means for attributing a level of overlap of the initial geobody to noise.

## DETAILED DESCRIPTION OF ILLUSTRATIVE EMBODIMENTS

In the oil and gas industry, seismic prospecting techniques commonly are used to aid in the search for and evaluation of subterranean hydrocarbon deposits. A seismic prospecting operation typically proceeds in three separate stages: data acquisition, data processing, and data interpretation. Success of the prospecting operation often depends on satisfactory completion of all three stages.

In the data acquisition stage, a seismic source emits an acoustic impulse known as a "seismic signal" that propagates into the earth and is at least partially reflected by subsurface seismic reflectors (i.e., interfaces between underground formations having different acoustic impedances). The reflected signals (known as "seismic reflections") are detected and recorded by an array of seismic receivers located at or near the surface of the earth, in an overlying body of water, or at known depths in boreholes.

During the data processing stage, raw seismic data recorded in the data acquisition stage are refined and enhanced using a variety of procedures that depend on the nature of the geologic structure being investigated and on characteristics of the raw data. In general, the purpose of the data processing stage is to produce an image of the subsurface from the recorded seismic data for use during the data interpretation stage. The image is developed using theoretical and empirical models of the manner in which the seismic signals are transmitted into the earth, attenuated by subsurface strata, and reflected from geologic structures.

The purpose of the data interpretation stage is to determine information about the subsurface geology of the earth from the processed seismic data. The results of the data interpretation stage may be used to determine the general geologic structure of a subsurface region, to locate potential hydrocarbon reservoirs, to guide the development of an already discovered reservoir, or to help manage hydrocarbon extraction operations.

Often, three-dimensional seismic data is a useful tool for seismic prospecting operations. As used herein, a "three-dimensional seismic data volume" is a three-dimensional volume of discrete x-y-z or x-y-t data points, where x and y are mutually orthogonal, horizontal directions, z is the vertical direction, and t is two-way vertical seismic signal travel time. In subsurface models, these discrete data points are often represented by a set of contiguous hexahedrons known as "cells" or "voxels," with each cell or voxel representing a volume surrounding a single data point. Each data point, cell, or voxel in a three-dimensional seismic data volume typically has an assigned value ("data sample") of a specific seismic data attribute such as seismic amplitude, acoustic impedance, or any other seismic data attribute that can be defined on a point-by-point basis.

Seismic data can be represented by a seismic data trace. As used herein, a "seismic data trace" is a vertical record of a selected seismic attribute (e.g., seismic amplitude or acoustic impedance) at a single x-y (map) location. A seismic trace can be represented as a stack of cells or voxels, or by a continuous curve (known as a "wiggle trace") whose amplitudes reflect the attribute values at each z (or t) data point for the x-y location in question.

A common issue in three-dimensional seismic data interpretation concerns extraction of geologic features from a three-dimensional seismic data volume, evaluation of their geometric relationships to each other, and implications for connectivity. A "seismic object" generally is a region of connected voxels in a three-dimensional seismic data volume in which the value of a certain selected seismic attribute (acoustic impedance, for example) satisfies some arbitrary threshold requirement. For example, the number may be greater than some minimum value and/or less than some maximum value. Bulk processing of a seismic data volume at a certain attribute threshold results in the detection of one or more seismic objects (which can be "geobodies" or simply "bodies"). The seismic objects generally should correspond to actual underground reservoirs. Seismic data interpretation time could be reduced significantly via bulk processing a seismic data volume, and generating a collection of seismic objects, which represent the layered stratigraphy of the subsurface.

Identification of seismic objects (geobodies) can involve using various seismic attributes as indicators. In one exemplary embodiment, geobodies are identified by specifying a threshold attribute value. In one exemplary embodiment, geobodies are produced that are stratigraphically reasonable, for example to avoid producing geobodies that crosscut stratigraphic and structural boundaries or that have unrealistic shapes in which a geobody may overlie itself in a spiraling pattern.

The connectivity of porous and permeable hydrocarbon reservoir bodies is a control on the producibility of subsurface accumulations of oil and natural gas. Three-dimensional seismic frequently provides a key tool used by the oil and gas industry for assessment of reservoir connectivity. That tool yields volumetric images of subsurface strata using acoustic energy where each point (voxel) in the volume is characterized by its location and one or more seismic attributes such as reflectivity or impedance. Seismic volumes can be interrogated by computer-based methods to obtain subvolumes (geobodies) that are connected at some set of thresholds of a seismic attribute or set of attributes.

One technique for identifying and extracting seismic objects from a three-dimensional seismic data volume is known as "seed picking" (also known as "region growing"). Seed picking results in a set of voxels in a three-dimensional seismic data volume which fulfill user-specified attribute criteria and are connected. Seed picking has been implemented in several commercial software products such as VoxelGeo®, VoxelView®, GeoViz®, Gocad®, and others. Seed picking is an interactive method, where the user specifies the initial "seed" voxel and attribute criteria. The seed picking algorithm marks an initial voxel as belonging to the current object, and tries to find neighbors of the initial voxel that satisfy the specified attribute criteria. The new voxels are added to the current object, and the procedure continues until it is not possible to find any new neighbors fulfilling the specified criteria.

Seed picking typically involves assigning a criterion for connectivity. There are two criteria commonly used, although others may be defined and used. One definition is that two cells or voxels are connected (i.e., are neighbors) if they share a common face. By this definition of connectivity, a cell (or voxel) can have up to six neighbors. The other common criterion for being a neighbor is sharing either an edge, a face, or a corner. By this criterion, a cell (or voxel) can have up to twenty-six neighbors.

As described in U.S. Patent Number 5,586,082 to Anderson, et al., one exemplary method of seed picking or seed growing involves determining how seismic objects that are distinct at one threshold of a chosen attribute may be connected at another threshold. For example, high amplitude regions, suggestive of petroleum presence, may be identified using seismic attribute analysis, with the object of determining oil or gas migration pathways connecting those regions, or alternatively to determine that certain regions are unconnected.

One exemplary type of seed detection method is cell connectivity-based, thus criteria for connectivity is based on cell-to-cell contact. This cell-based approach generally treats each voxel or cell as an independent measurement of the subsurface. However, the primary elements in seismic data are usually reflections composed of many vertically stacked layers of cells which form oscillations about a zero mean. Data sets that are derivatives of reflection seismic surveys may not have attributes that vary about a zero mean, but they all have internal structure that follows the layered nature of the subsurface stratigraphy. In seismic amplitude data, reflections represent acoustic discontinuities in the subsurface and are the fundamental unit used in stratigraphic and structural interpretation. In reflection-based interpretation, it is the continuity and amplitude characteristics of the reflections more than the values of the voxels that make them up that are relevant.

Commercial seed detection methods are often solely cell connectivity-based and lack adequate provisions for analysis of the resulting geobodies, which would support using seed detection and geobody identification for reservoir characterization workflows. U.S. Patent Number 6,823,266 to Marek Czernuszenko et al. and U.S. Patent Number 6,674,689 to Paul Dunn and Marek Czernuszenko describe methods for analyzing the connectivity and three-dimensional characteristics (shape) of geobodies extracted from three-dimensional seismic volumes. These methods allow the geoscientist to collect many geobodies into meaningful assembleges defining larger units that may control subsurface flow in hydrocarbon reservoirs. One notable use of this assemblege of geobodies is in a reservoir characterization and modeling workflow as described in U.S. Patent Application Number 60/609,057 to van Wagoner et al.

Since geobody detection and analysis is often a preliminary step in a seismic-based reservoir modeling workflow, considerable effort has been devoted to refining the process. Any inaccuracies in the initial geobody definition can propagate errors in a cascade down through the rest of the workflow.

U.S. Patent Number 7,024,021 to Paul Dunn and Marek Czernuszenko describes a method (called StrataSeed) for including connectivity criteria beyond cell-to-cell contact through the integration of criteria that include larger scale features such as reflections or other layered structures composed of many individual cells. All seed detection algorithms, including StrataSeed, can produce stratigraphically unreasonable geobodies, although StrataSeed can be tuned to prevent self-overlapping geobodies (see below). Previous automated techniques, including StaratSeed, often produced geobodies that crosscut stratigraphic and structural boundaries and have unrealistic shapes in which a geobody may overlie itself in a spiraling pattern. A fundamental law of stratigraphy is that older strata are always overlain by younger strata (law of superposition). Bodies detected from three-dimensional seismic volumes that form spirals or self-overlapping branching shapes violate this law and can not represent the actual subsurface layering.

The generation of self-overlapping geobodies is a result of a fundamental dilemma in volumetric seed detection using attribute thresholds. Narrow thresholds tend to yield many simple, isolated bodies that may be readily interpreted in terms of the stratigraphic features they represent (e.g. channel fills, delta or deep sea fan lobes), but commonly underestimate reservoir-wide connectivity. Wide thresholds, conversely, result in selection of large numbers of voxels that form complex, self-overlapping, amorphous geobodies that are not stratigraphically reasonable and are difficult to interpret.

Technology disclosed in U.S. Patent Number 7,024,021 (StrataSeed) can reduce the picking of unreasonable bodies and address the self-overlap issue through a map view criteria check during geobody detection. This latter constraint eliminates self-overlapping geobodies, yielding composite geobodies (groups of geobodies in contact with one and other). Composite geobodies are preferable to self-overlapped individual objects in that the component geobodies conform to the law of superposition while still being in contact with their neighbors to represent possible subsurface flow networks. A disadvantage of the method of U.S. Patent Number 7,024,021 is that the boundaries between individual bodies are determined by the order in which the voxels are selected during bulk processing of the seismic cube and not by strictly stratigraphic criteria.

A need exists for an enhanced method for identifying and extracting connected bodies using wide thresholds of seismic attributes while still yielding stratigraphically reasonable individual geobodies that may be in contact with each other to form flow networks of permeable sand bodies. An exemplary embodiment discussed below satisfies this need for users-guided, computerized segmentation of three-dimensional bodies into stratigraphically reasonable component parts.

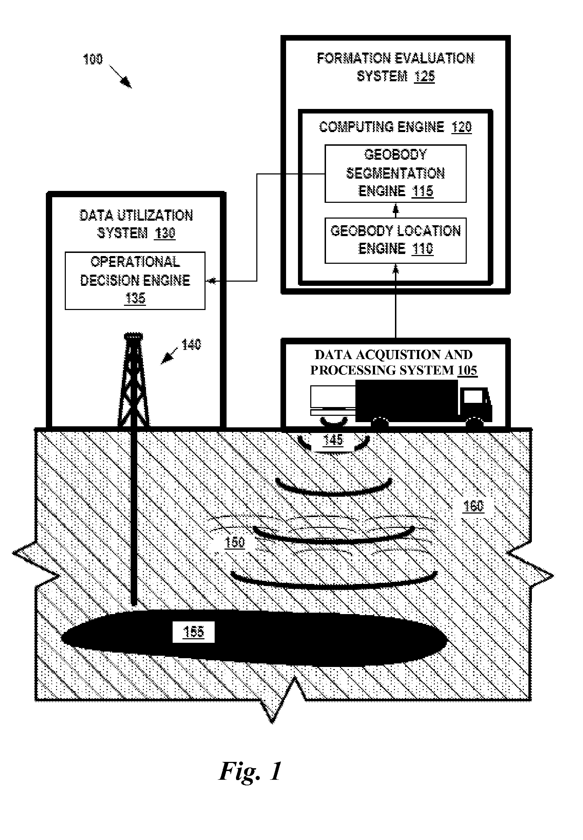

Figure 1 illustrates a system **100** for acquiring geological data, evaluating the data, and utilizing the resulting evaluation to benefit a petroleum operation. The data acquisition system **105** acquires seismic data via emitting vibrations **145** into the earth and then detecting reflections **150** from formation interfaces, for example between a petroleum bearing formation **155** and another formation **160.**

The data acquisition and processing system **105** provides the acquired seismic data to a formation evaluation system **125,** which may be either collocated or remote. In an exemplary embodiment, the formation evaluation system **125** can include one or more computers, signal processing circuits, user interfaces, data archives, display monitors, keyboards, microprocessors, servers, etc. that are capable of executing software, code, logic, or computer-based instructions. For example, the computing engine **120** can include a computing device that executes or runs computer-implemented processes, methods, or routines.

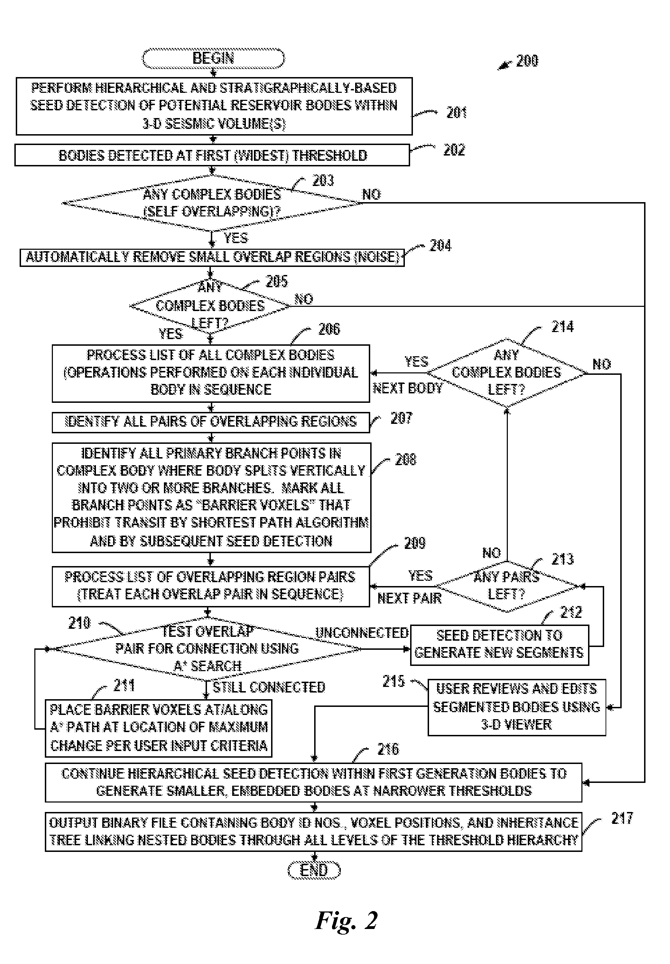

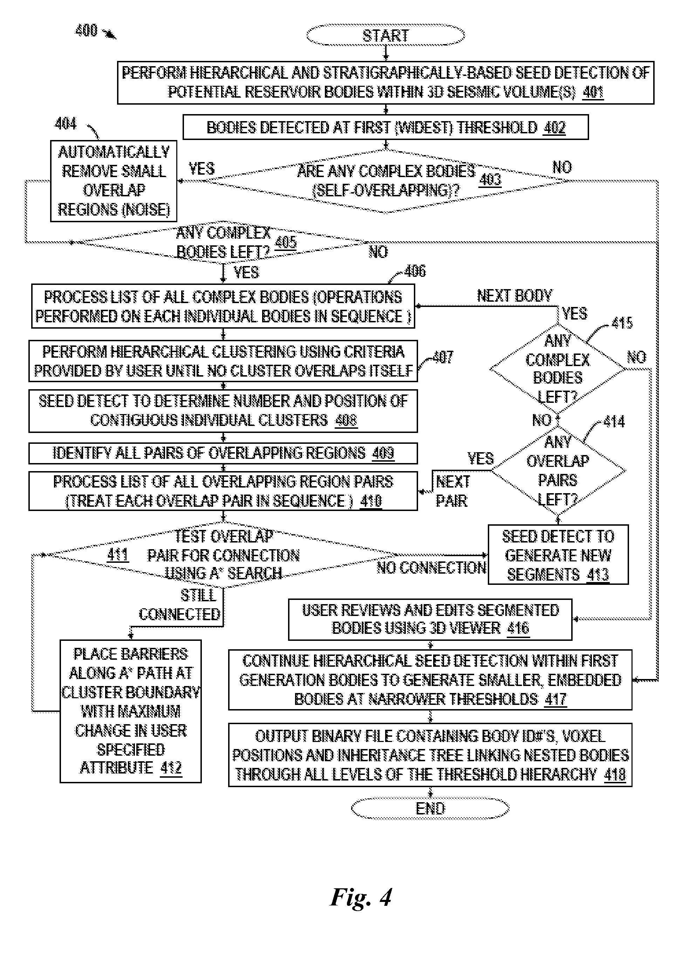

In an exemplary embodiment, the computing engine **120** can implement process **200** and/or process **400,** which will be discussed in further detail below with reference to Figures 2 and 4 respectively. Moreover, the computing engine **120** can further execute one or more of the processes or methods discussed above. For example, the computing engine **120** can include or can run the geobody location engine **110** for identifying geobodies in the acquired seismic data. To segment the identified geobodies so that they represent actual geological structures, the geobody segmentation engine **115** can execute on the computing engine **120,** for example as an exemplary embodiment of process **200** or process **400.**

Based on processing by the geobody segmentation engine **115** and the formation evaluation system **125,** the formation evaluation engine **125** provides geologically accurate information to the data utilization system **130.** The data utilization system **130** can include computing devices, people, infrastructure, and equipment for finding petroleum, drilling, extracting petroleum, and generating profit from petroleum operations. For example, the data utilization system **130** can include an operational decision engine **135** that aids petroleum operators, engineers, and managers in making drilling decisions. Such decisions can include deciding if drilling is appropriate and determining where to place an oil well **140** based on the segmented geobodies identified by the formation evaluation engine **125.** Moreover, the operational decision engine **135,** in various exemplary embodiments, can support a wide range of decision making and operations management for petroleum operation or exploration. Accordingly, properly or beneficially segmenting geobodies, in accordance with an exemplary embodiment, can have a significant impact on an oil company's profit.

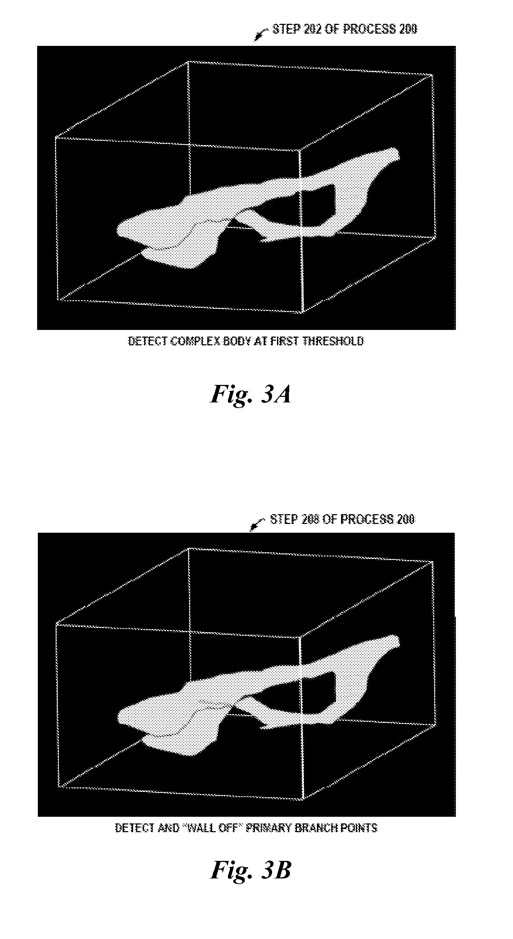

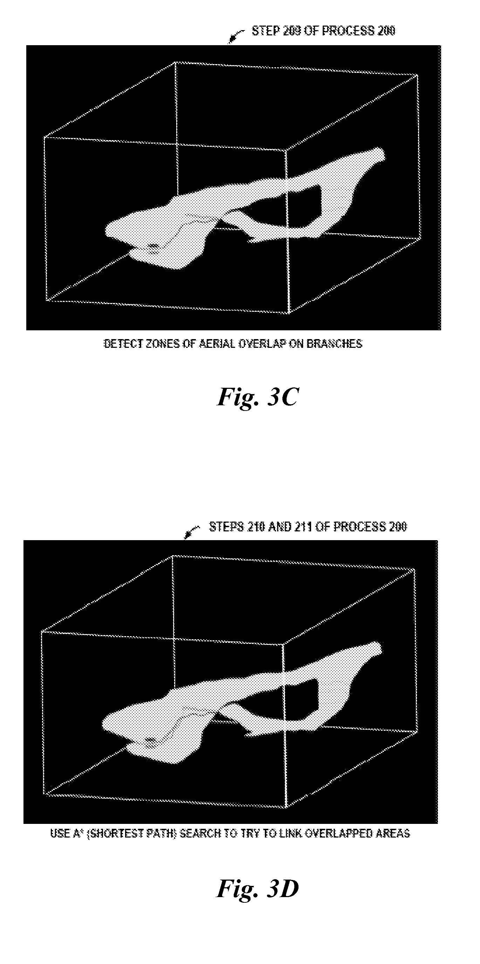

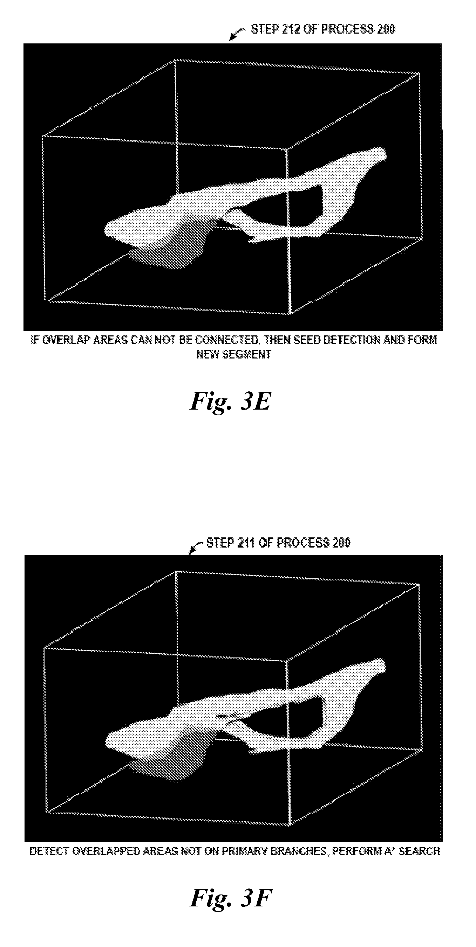

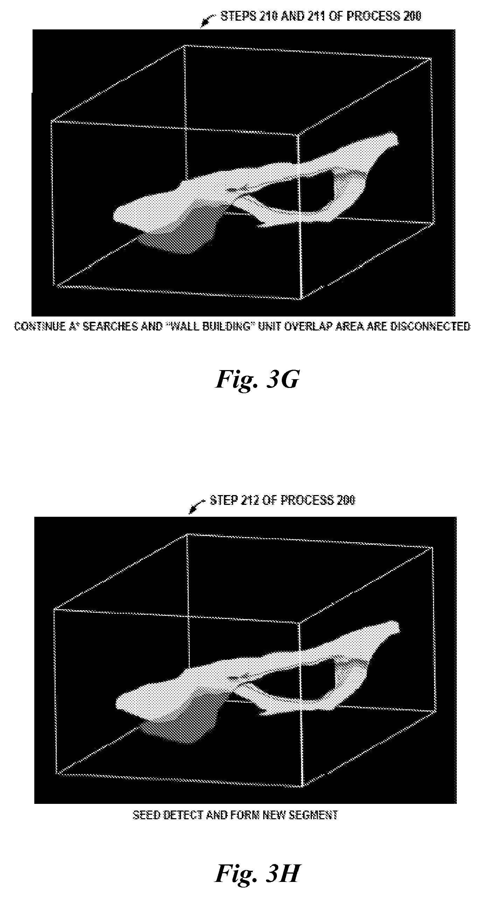

Referring to Figure 2 and Figure 3A-H, one exemplary embodiment uses a multi-step method **200** to segment a complex three-dimensional body using repetitive shortest path searches in which a likely segmentation point is marked on each path. Collectively, these segmentation points eventually form a "segmentation wall" along which the body will be split into two more fundamental bodies. While Figure 2 illustrates a flowchart of the exemplary method **200,** Figures 3A-H illustrate an exemplary application of various steps in the method **200.** More specifically, Figures 3A-H illustrate an exemplary segmentation of a complex self-overlapping body. Figures 3A, 3B, 3C, 3D, and 3E depict a primary branch being segmented. Meanwhile, Figures 3F, 3G, and 3H illustrate segmenting a "spiral" in which overlap occurs without vertical branching. The illustrations of Figures 3A-3H each indicate the corresponding steps of exemplary process **200.**

In an exemplary embodiment, steps **201** and **202** can involve application of stratigraphically-based seed detection, such as discussed in U.S. Patent No. 7,024,021. Figure 3A illustrates detecting a complex body in accordance with an exemplary embodiment of step 202.

In one exemplary embodiment, steps **201** and **202** can also include methodology described in either or both of U.S. Patent Number 6,823,266 and U.S. Patent Number 7,024,021, discussed above. The entire disclosures of U.S. Patent Number 6,823,266 and U.S. Patent Number 7,024,021 are hereby incorporated herein by reference. In an exemplary embodiment, seed detection occurs at step **201,** and bodies are detected at step **202.** Steps **201** and **202** can thereby define geobodies which, when selected at open attribute thresholds, may take complex forms including those that overlap themselves in spiral and branching patterns (when the map-view constraint is turned off). That is, the resulting geobodies may be unreasonable or may fail to comply with one or more validity criteria. As discussed above, a valid geobody generally should not overlap itself so as to turn back on itself with a distinct layer of material between the overlap. Such a condition indicates that the geobody should in fact be separated into two or more geobodies in order to properly reflect actual geology.

In an exemplary embodiment, in step **203,** the bodies detected at the first threshold are checked to see if they vertically overlap themselves at any point. Such overlap violates the stratigraphic law of superposition which states that layers deposited on top of other deposits must be younger than the underlying strata. Testing against this law is but one example of applying a rule, a law, or a criterion to a body to evaluate whether the body is likely to appropriately represent a body actually occurring in nature. Other rules, laws, or criteria can be applied as appropriate.

In an exemplary embodiment, in steps **204** and **205,** small regions of overlapping voxels that the user has deemed to be insignificant are found and deleted. Steps **204** and **205,** which are optional in an exemplary embodiment, can include manual intervention from the user or automatic processing based on user input or user responses. In an exemplary embodiment, overlap associated with noise is eliminated or otherwise addressed.

In an exemplary embodiment, in step **206,** a processing loop begins wherein all complex (self-overlapping) bodies are segmented sequentially or one at a time. That is, step **206** can be viewed as initiating a loop that iterates or continues until no geobody overlaps itself in a manner that would violate the stratigraphic law of superposition. In an alternative embodiment, iterative processing can eliminate some other feature or data attribute that fails to comply with a natural law, a manmade rule, or a validity criterion.

In an exemplary embodiment, all (or essentially all) zones of overlapping voxel regions are identified in step **207.** In an exemplary embodiment, processing at step **208** identifies all points within the complex bodies where overlap is generated by vertical branching. The branching points are marked as "barrier voxels" that prohibit transit by the shortest path algorithm and by subsequent seed detection. Accordingly the voxel locations of these branch points are marked and are considered as barriers to all further connectivity routines. Figure 3B illustrates detecting and "walling off" primary branch points in accordance with an exemplary embodiment of step **208.**

In an exemplary embodiment, in step **209,** process **200** (or a computer program embodiment thereof) enters a loop that cycles through each overlapping pair in the complex body being processed. The loop processes the list of overlapping region pairs and treats each overlap pair in sequence. Figure 3C illustrates detecting zones of aerial overlap on branches in accordance with an exemplary embodiment of step **209.**

In an exemplary embodiment, in step **210,** the complex geobodies are segmented. One exemplary process for such segmentation applies the "$A*$ search algorithm" or "A star" methodology. Figure 3D illustrates using an $A*$ shortest path search for linking overlapped areas as appropriate, in accordance with an exemplary embodiment of step **210** and step **211** (discussed below).

$A*$ is an exemplary embodiment of a graph or tree routine that can identify a path between a specified initial node and a specified goal node that passes a goal test. The $A*$ process employs a heuristic estimate that ranks nodes according to an estimate of the best path that includes each node. $A*$ can be viewed as an exemplary embodiment of a best-first search.

Accordingly, *A\** is a heuristic-based graph search routine that finds the shortest path from a given initial node to a given goal node. In this case, voxels within the overlapping regions are considered as "initial nodes" if they are in the lower region and "goal nodes" when they occur in the upper region. The search is conducted from base to top for each of the overlapping region pairs.

A discussion of an exemplary *A\** search routine is provided in a paper by Hart et al, entitled "A Formal Basis for the Heuristic Determination of Minimum Cost Paths" on pages 100-107 of IEEE Transactions on Systems Science and Cybernetics SSC4 (2) (1968), the entire contents of which are hereby incorporated herein by reference.

Referring now to process **200** of Figure 2, once the *A\** search routine finds a shortest path between two voxels in opposing overlap regions, step **211** executes. In an exemplary embodiment, in step **211,** the route is inspected with a user-defined window to locate regions of steep vertical gradients. The voxel location where the shortest path makes its steepest climb or descent is marked, and future searches are prohibited from traversing that location. Thus, barrier voxels are placed along the *A\** path at a location of maximum change as defined by the gradient calculation. The *A\** routine searches iteratively through steps **210** and **211,** and "barrier voxel" marking continues until there is no longer a path between the two overlapping regions. When this condition occurs, the iterating ceases and process **200** executes step **212.**

In step **212,** in an exemplary embodiment, the two regions are segmented by seed detection, once again using the marked voxel locations as barriers. In an exemplary embodiment, the seed detection of step **212** can proceed in accordance with the above discussion of seed detection methodologies, for example per the disclosure of U.S. Patent Number 7,024,021, discussed above.

Figure 3E illustrates an exemplary embodiment of step **212.** As shown in Figure 3E, if overlap areas can not be connected, then process **200** proceeds with seed detection to form a new segment.

In an exemplary embodiment, process **200** continues through steps **213** and **214,** looping through each pair of overlapped regions in a particular complex geobody and then through each remaining complex geobody. In an exemplary embodiment, at step **213,** an inquiry determines whether any overlapping pairs exist in the current geobody being processed. If the inquiry returns positive, step **209** executes. On the other hand, if the inquiry results in a negative determination, then step **214** executes to determine if any other complex bodies remain. If a complex body remains, then process **200** proceeds with step **206;** otherwise, step **215** executes following step **214.**

Figure 3F illustrates detecting overlapped areas not on primary branches and performing the *A\** search via executing or iterating step **211** according to an exemplary embodiment. Meanwhile, Figure 3G depicts continuing *A\** searches, as discussed above, and "wall building" so that unit overlap areas are disconnected in accordance with performing steps **210** and **211** in an exemplary embodiment. As shown in Figure 3H, an exemplary embodiment of step **212** can proceed to seed detection and to form a new segment.

In an exemplary embodiment, the user has an opportunity in step **215** to edit the segmented complex body (now a conjoined family of fundamental bodies) within a three-dimensional viewer/editor provided by the software. This interactive step can be optional and may be omitted when the user desires to process a large number of bodies in batch mode, for example.

In an exemplary embodiment, the segmented bodies are returned to the hierarchical seed detection process in step **216** for analysis at progressively finer thresholds as set by the user. In other words, hierarchical seed detection continues within first generation bodies, resulting in the generation of smaller embedded bodies at narrower thresholds. In an exemplary embodiment, step **216** includes seed detection methodology disclosed in U.S. Patent Number 7,024,021, as discussed above

In step **217,** in an exemplary embodiment, a binary file is output that contains all detected geobodies with their inheritance "tree" data structure. That is, the file contains a lineage of nested bodies that can provide a historical record of the processing that produced the final form of the geobodies. In an exemplary embodiment, process **200** ends following step **217.**

In an exemplary embodiment, an oil company can drill and extract petroleum based on the results of process **200.** Thus, segmenting the geobodies to match real-world geology can aid in identifying or assessing a petroleum reservoir, determining a preferred approach to drilling, optimally extracting oil, completing oil wells, and/or operating a petroleum field or business in a financially profitable manner. Operational decisions that can benefit from accurate segmentation can include determining how to increase yield of a well, deciding where to drill additional wells, determining extraction techniques and enhanced oil recovery, and discovering well-to-well interaction, for example.

As an alterative to the exemplary embodiment of Figures 2 and 3A-3H, a method for segmenting complex geobodies can include applying statistical techniques. For example, Figure 4 illustrates a flowchart of an exemplary embodiment of a method **400** that can include performing statistical clustering on a complex geobody in order to establish a three-dimensional network of boundaries that will serve as a framework for segmentation. A software or computer-based implementation of this method **400** can provide a tool that segments geobodies based on statistical clustering of the bodies' voxels. The analysis of clustering can be accomplished using the spatial arrangement of the voxels (x-y-z), their voxel attributes, or both spatial arrangement and attributes. That is, clustering analysis can include evaluating physical positions (e.g. coordinate locations in three-dimensional space) and/or evaluating one or more parameters other than physical positions, wherein the parameters may include multiple dimensions.

The flowchart for process **400** (depicted in Figure 4) bears resemblance to the flowchart for process **200** (depicted in Figure 2). (Both Figs. 2 and 4 are much more detailed and devoted to particular embodiments than Figure 11, which is more directed to describing the general invention.) Accordingly, the logical flow of process **400** can follow a similar flow to the flow of process **200,** discussed above. However, an exemplary embodiment of process **400** omits step **218** while including several subsequent new steps, as discussed below.

In an exemplary embodiment, certain steps of process **400** can correspond to certain steps of process **200,** either being similar, essentially equivalent, or approximately equal. An exemplary listing (neither limiting nor necessarily comprehensive) of various corresponding (e.g. similar) steps between process **400** and process **200** follows. In an exemplary embodiment, step **401** can correspond to or perform like step **201**. In an exemplary embodiment, step **402** can correspond to or perform like step **202**. In an exemplary embodiment, step **403** can correspond to or perform like step **203**. In an exemplary embodiment, step **404** can correspond to or perform like step **204**. In an exemplary embodiment, step **405** can correspond to or perform like step **205**. In an exemplary embodiment, step **406** can correspond to or perform like step **206**. In an exemplary embodiment, steps **407, 408,** and **409** can collectively correspond to steps **207** and **208,** with a distinction being that steps **407, 408,** and **409** involve hierarchical clustering in an exemplary embodiment. Step **410** can correspond to or perform like step **209**. In an exemplary embodiment, step **411** can correspond to or perform like step **210**. In an exemplary embodiment, step **412** can generally correspond to step **211,** with step **412** involving cluster boundaries. In an exemplary embodiment, step **413** can correspond to or perform like step **212**. In an exemplary embodiment, step **414** can correspond to or perform like step **213**. In an exemplary embodiment, step **415** can correspond to or perform like step **214**. In an exemplary embodiment, step **416** can correspond to or perform like step **215**. In an exemplary embodiment, step **417** can correspond to or perform like step **216**. In an exemplary embodiment, step **418** can correspond to or perform like step **217**.

In an exemplary embodiment, step **407** involves statistical clustering of all (or essential all, or most of) the voxels in the complex body being processed. The clustering analysis can be accomplished by a variety of known statistical methods. In one exemplary embodiment, the clustering analysis can include k-means processing. In one exemplary embodiment the clustering analysis can include hierarchical processing. In one exemplary embodiment, the clustering analysis can include agglomerative processing that can be a form of hierarchical processing. In one exemplary embodiment, the clustering analysis can include divisive processing that can be a form of hierarchical processing.

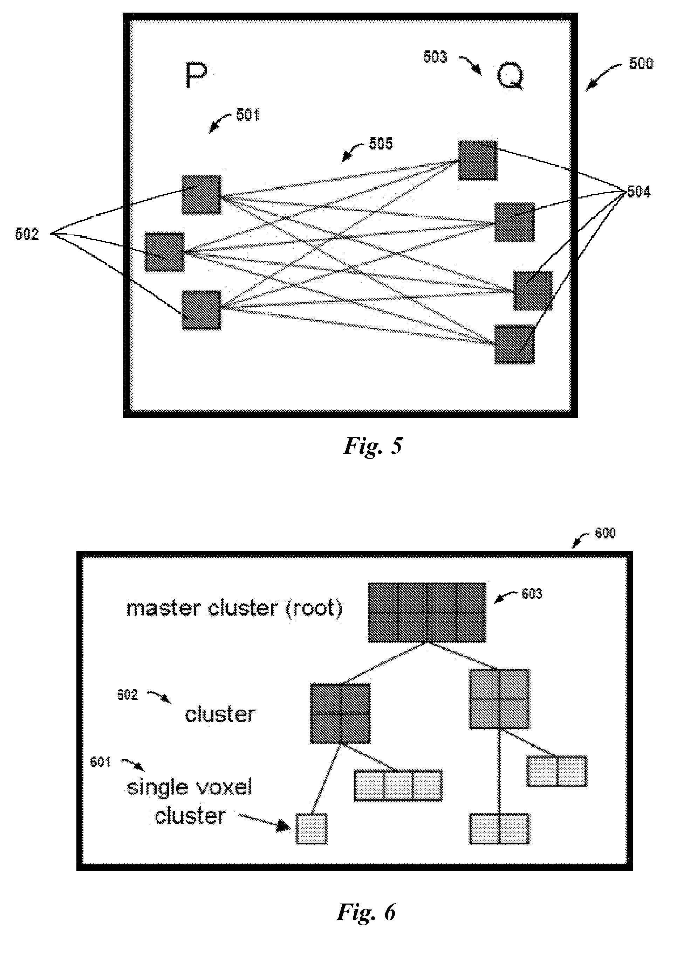

For purposes of illustration, application of one clustering method, hierarchical agglomerative clustering ("HAC") will be described in further detail, with reference to Figures 5 and 6 that illustrate exemplary functions of step **407**. HAC is a technique for statistical analysis in which progressively larger clusters are constructed beginning with individual data points and ending with a single large body. In the present application, an optimum, intermediate level of clustering is determined whose boundaries can be used to segment the initial body into non-overlapping regions without being overly fragmentary. The voxels can be clustered on the basis of their positional data (x-y-z) or by attribute or set of attributes (amplitude, dip, dip direction, impedance, etc.) or by any combination of positional and attribute data.

As an example, if the user wishes to cluster based on all three-dimensions, as well as dip volume values and discontinuity volume values, each voxel would conceptually have the following data structure associated with it: X, Y, Z, dip, and discontinuity. The spatial attribute X, Y and Z describe the three-dimensional position (physical location) of each voxel while dip and discontinuity are attributes that can be calculated from seismic volumes. Dip describes the angle from horizontal in the vertical plane defined by the slope of a region of voxels. Discontinuity describes the change in the statistical correlation of an attribute such as seismic amplitude between adjacent stacks of voxels. Another attribute or set of attributes can be selected by the user. Thus, clustering can proceed based on data derived from a sensor or associated with a signal in addition to data that is strictly positional.

To support performing HAC, a metric for measuring distance between voxels is defined. The Euclidean distance can be used, although there are other options. The Euclidean distance between two voxels is calculated as the square root of the sum of the squares of the difference between each datum value associated with each voxel. For our example, the Euclidean distance between voxels A and B can be calculated as:

$$\sqrt{\left(X_A - X_B\right)^2 + \left(Y_A - Y_B\right)^2 + \left(Z_A - Z_B\right)^2 + \left(dip_A - dip_B\right)^2 + \left(disco_A - disco_B\right)^2}$$

Note that this distance is not merely the spatial distance between voxels, but rather is the distance between the voxel data points in N-dimensions, where N is the number of data pieces associated with each voxel (N is 5 in this example). For this reason, it is often appropriate to normalize the voxel data prior to clustering to place each piece of data is on a like scale. The user can choose to normalize his or her data prior to clustering.

HAC also involves a metric for measuring distance between clusters made up of one or more voxels. Multiple options are available for the metric. A measurement called average linkage is being used in this example. Accordingly, the distance between two clusters is taken to be the average of the distances between their constituent voxels. That is, if cluster P **501** contains three voxels **502** and cluster Q **503** contains four voxels **504,** as shown in an exemplary embodiment in the diagram **500** of Figure 5, then twelve voxel distances **505** will be calculated, one for each distinct pair of voxels **502, 504** from cluster P **501** and cluster Q **503**. The distance between clusters P and Q **501, 503** is then calculated as the average of those twelve distances **505.**

Referring now to Figure 6, initially, each voxel **601** is considered its own separate cluster **601**. The cluster distance metric is used to locate the two clusters **602** that are closest together, which are merged into a single cluster **603**. This process repeats until all voxels belong to a single master cluster **603**. During clustering, a tree data structure **600** is built that records the clusters merged at each step and the distance between them. The root of the tree **600** represents the master cluster **603.**

Once the HAC of step **417** (of process **400** illustrated in Figure 4), completes, the tree of clusters is traversed down from the root to find the highest-level (i.e. largest) clusters whose voxels do not vertically overlap. These clusters are not necessarily contiguously connected in three dimensions, so seed detection is performed in each one to find the contiguous sub-clusters that make them up.

In an exemplary embodiment, in step **418,** spatially distinct clusters are identified through seed detection analysis to identify contiguous individual clusters. In an exemplary embodiment, steps **411** and **412** can include using the clustered version of the complex body as input. Execution of step **411** can involve shortest path searching between pairs of overlapped regions.

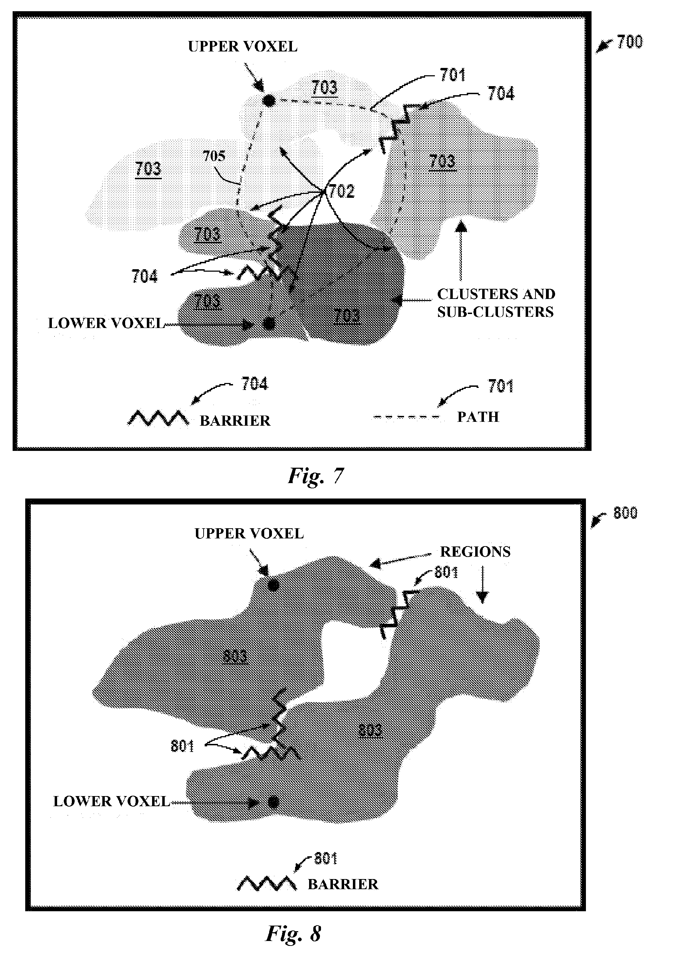

However, as shown in the exemplary diagram **700** of Figure 7, the specific location for body segmentation in vertical, cross section view is determined through the intersection of the shortest path **701** with the complex body cluster boundaries **702.** An analysis is made along the length of the shortest path **701** comparing each pair of clusters **703** crossed, keeping track of the degree of difference in each cluster's positional and/or attribute statistics. In an exemplary embodiment, in step **412,** the adjoining cluster pair boundary showing the greatest difference in one or more user selected criteria is marked as a "segmentation wall" or barrier **704**. Another viable shortest path is indicated by **705**. The shortest path is run repeatedly, with the search algorithm being prohibited from transiting across walls **704** formed by preceding searches, until no connection exists between the pair of overlapping regions. The complete separation of an overlap pair usually involves a composite boundary **704** formed by a connected network of cluster pair boundaries.

In an exemplary embodiment, in step **413,** segmentation is accomplished as discussed above via seed detection. As shown in the diagram **800** of Figure 8, the composite boundary **801** is simplified by a routine that assigns any isolated fragments generated to the most similar (i.e. closest in terms of cluster distance as described above) cluster area as long no vertical overlap is generated. Seed-detection runs inside the original geobody using the barriers established in the previous step, separating it into at least two regions. One region contains the lower overlap voxel, and another contains the upper overlap voxel. Because of the complexity of the paths between the two regions, barriers **801** may have been inserted that break the geobody **802** into more than two pieces **803.**

If any of the segmented regions still contain overlapping voxels, then a new sub-volume is created containing those voxels. That sub-volume will then be segmented using shortest-paths and barriers as described above. This continues until none of the regions overlap themselves. Subsequently, in step **414,** the next overlapped region is input to the routine in an exemplary embodiment. This process continues until a determination is made at step **415** that all overlaps and complex geobodies have been segmented and no further vertical overlap exists. In an exemplary embodiment, steps **416, 417,** and **418** can be essentially identical to the final three steps of process **200,** discussed above.

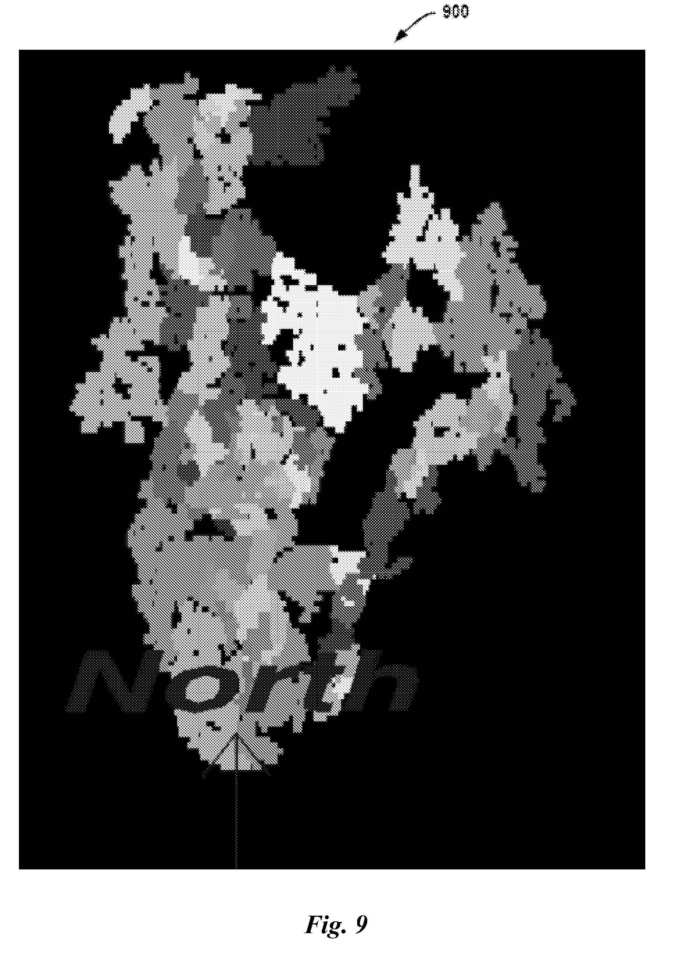

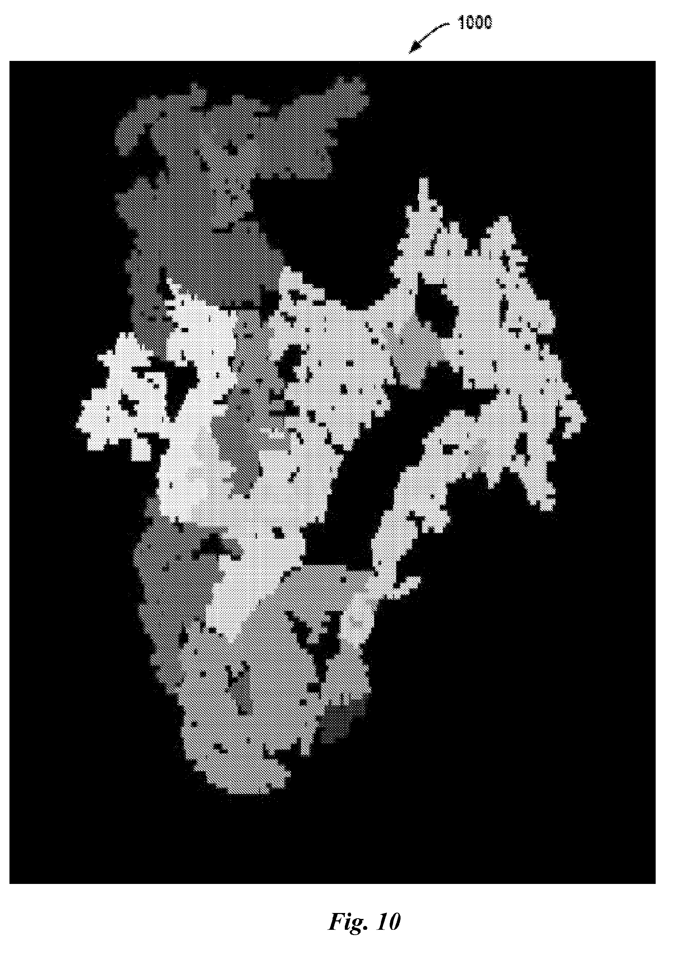

Figure 9 shows a complex body extracted from a seismic cube at a single attribute threshold which was then broken into non-overlapping clusters using a hierarchical clustering technique in accordance with step **417** of process **400.** Figure 10 illustrates the final segmented body resulting from an automated segmented process in accordance with step **413** of process **400.**

An oil and gas prospecting method for predicting connectedness between parts of a potential hydrocarbon reservoir identified in a geophysical data volume corresponding to a subsurface region has been described. In an exemplary embodiment, that method includes obtaining a plurality of data elements, respectively corresponding to three dimensional locations in the subsurface region, and generating a data volume consisting of discrete cells from the plurality of data elements; identifying an initial geobody corresponding to a potential hydrocarbon reservoir within the data volume by grouping cells in the data volume according to a selected connectivity criterion; selecting a rule that characterizes stratigrapically reasonable geobodies; in response to a determination that the initial geobody does not conform to the rule, segmenting the initial geobody into a plurality of fundamental geobodies via processing the data elements with an automated segmentation routine, wherein the fundamental geobodies each conform to the rule; and using the fundamental geobodies to predict connectedness between parts of the potential hydrocarbon reservoir. In an exemplary embodiment, the geophysical data are seismic data or seismic attribute data. In an exemplary embodiment, the method further includes, after a determination that the initial geobody does not conform to the rule but before segmenting: selecting a threshold considered to approximate noise levels in the data, then identifying the cells that are responsible for the initial geobody's nonconformance to the selected rule, then adjusting the initial geobody by removing any such cells having data values below the selected noise-related threshold, then repeating the determination of whether the initial geobody, after said adjustment, conforms to the rule. In an exemplary embodiment, the rule is a lateral bifurcation criterion, whereby a criterion is selected limiting geobody branching in a horizontal dimension. In an exemplary embodiment, the rule is a law of superposition, limiting the extent to which a geobody may overlap itself in the vertical dimension, wherein two cells in a geobody are considered to overlap if they have the same horizontal coordinates and are separated vertically by at least one cell not in the geobody. In an exemplary embodiment, the automated segmentation routine uses a shortest path search algorithm. In an exemplary embodiment, segmenting the initial geobody into a plurality of fundamental geobodies includes: (i) identifying all zones of overlapping cells within the initial geobody; (ii) identifying all cells within the potential geobody where overlap is generated by vertical branching, and designating such cells as barrier cells for shortest path searches in subsequent steps; (iii) for each pair of cells lying one each in overlapping zones, using a shortest path search algorithm to find the shortest path between the pair of cells, and finding the cell of steepest slope for each shortest path and designating it as a barrier cell; (iv) repeating step (iii), observing barrier cells, until there are no longer any paths between any overlapping zones; and (v) segmenting the initial geobody into two or more fundamental geobodies using the designated barrier cells as boundaries. In an exemplary embodiment, the shortest path search algorithm is the $A^*$ algorithm. In an exemplary embodiment, the automated segmentation routine uses a 3D network of boundaries developed by performing statistical clustering analysis on the initial geobody. In an exemplary embodiment, the automated segmentation routine uses a shortest path search algorithm to find shortest paths between pairs of at least partially overlapping clusters within the initial geobody. In an exemplary embodiment, the geophysical data are seismic data or seismic attribute data, and segmenting the initial geobody into a plurality of fundamental geobodies includes: clustering cells in the potential geobody based on positional data or seismic attribute data or a combination thereof, forming a plurality of non-overlapping clusters which are identified as fundamental geobodies. In an exemplary embodiment, segmenting the initial geobody into a plurality of fundamental geobodies further includes: (i) performing statistical clustering using one or more selected spatial or attribute criteria until no individual cluster violates the selected rule for stratigraphic reasonableness; (ii) identifying number and spatial locations of all clusters using one or more selected connectivity criteria; (iii) detecting all possible pairs of clusters that do not conform to the selected rule for stratigraphical reasonableness; (iv) selecting a pair of clusters that do not conform to the rule and applying an $A^*$ shortest path algorithm to identify a shortest path between the selected pair of clusters; (v) identifying a location of maximum change where the shortest path crosses a boundary between adjacent clusters and designating all cells having the same horizontal coordinates as that location as a barrier cell set throughout the thickness of the initial geobody; (vi) repeating steps (iv) and (v) until there are no longer any possible paths between the selected pair of clusters; (vii) repeating steps (iii) through (vi) until there are no longer any cluster pairs that violate the selected rule; and (vii) segmenting the initial geobody into two or more fundamental geobodies using the designated barrier cells. In an exemplary embodiment, the statistical clustering analysis is k-means clustering or hierarchical divisive clustering. In an exemplary embodiment, the statistical clustering analysis is hierarchical agglomerative clustering. In an exemplary embodiment, the method further includes planning development of the potential hydrocarbon reservoir using connectivity assumptions based on the fundamental geobodies.

An oil and gas prospecting method for predicting connectedness between parts of a potential hydrocarbon reservoir identified in a geophysical data volume corresponding to a subsurface region has been described. In an exemplary embodiment, the described method includes (a) obtaining a seismic or seismic attribute data volume of discrete cells, said data volume representing the subsurface region, and identifying an initial geobody corresponding to a potential hydrocarbon reservoir within the data volume by grouping cells in the data volume according to a selected connectivity criterion based on data changes from cell to cell; (b) in response to a determination that the initial geobody contains vertically overlapping regions, finding the shortest path between a selected pair of vertically overlapping regions; (c) breaking the shortest path by creating barrier cells or by removal of cells from the initial geobody; (d) repeating (b) and (c) honoring the barriers until no path exists between the selected pair of overlapping regions; (e) repeating (b) through (d) for all remaining pairs of vertically overlapping regions; (f) segmenting the initial geobody into fundamental geobodies according to barrier cells and removed cells; and (g) using the fundamental geobodies to predict connectedness between parts of the potential hydrocarbon reservoir. In an exemplary embodiment, the shortest path is found using the $A^*$ search algorithm.

A method of producing hydrocarbons from a reservoir in a subsurface region has been described that includes: (a) obtaining a seismic or seismic attribute data volume representing the subsurface region, wherein an initial geobody is identified, using an assumed connectivity criterion, as corresponding to a potential hydrocarbon reservoir, said initial geobody containing portions overlapping other portions in the vertical dimension; (b) obtaining a processed version of the data volume wherein the initial geobody is segmented into two or more fundamental, non-self-overlapping geobodies, said segmentation having been performed by steps including: (i) using a shortest path search algorithm, finding all possible shortest paths between portions of vertically overlapping regions in the initial geobody; (ii) breaking the shortest paths by creating barrier cells or by removal of cells from the initial geobody; (iii) segmenting the initial geobody into fundamental geobodies according to barrier cells and removed cells; (c) using the fundamental geobodies to predict connectedness between parts of the potential hydrocarbon reservoir; and (d) producing hydrocarbons from the subsurface region using the connectedness predictions to plan reservoir development.

An oil and gas prospecting method for predicting connectedness between parts of a potential hydrocarbon reservoir identified in a geophysical data volume corresponding to a subsurface region has been described. In an exemplary embodiment, the method includes: representing the subsurface region as a plurality of voxels; associating a respective data sample with each of the plurality of voxels; identifying an initial geobody in the subsurface region via aggregating selected ones of the plurality of voxels; segmenting the initial geobody into a plurality of fundamental geobodies via hierarchical processing; and using the fundamental geobodies to predict connectedness between parts of the potential hydrocarbon reservoir. In an exemplary embodiment, segmenting the initial geobody into the plurality of fundamental geobodies bodies via hierarchical processing includes clustering as described above in the discussion of Figure 6. In an exemplary embodiment, segmenting the initial geobody into the plurality of fundamental geobodies via hierarchical processing further includes segmenting the initial geobody according to the determined distances. In an exemplary embodiment, each of the determined distances has at least four dimensional components (although the invention may be performed with fewer than four). In an exemplary embodiment, each of the determined distances depends upon a parameter derived from a signal that has interacted with the subsurface region. (In other embodiments of the invention, the parameter can be spatial based (not signal based) as described above.)

An oil and gas prospecting system for predicting connectedness between parts of a potential hydrocarbon reservoir identified in a geophysical data volume corresponding to a subsurface region has been described. In an exemplary embodiment, the system includes means for representing the subsurface region as a plurality of voxels; means for associating a respective data sample with each of the plurality of voxels; means for identifying an initial geobody in the subsurface region via aggregating selected ones of the plurality of voxels; means for segmenting the initial geobody into a plurality of fundamental geobodies via hierarchical processing; and means for using the fundamental geobodies to predict connectedness between parts of the potential hydrocarbon reservoir. In an exemplary embodiment, the means for segmenting the initial geobody into the plurality of fundamental geobodies includes a means for attributing a level of overlap of the initial geobody to noise.

Although illustrative embodiments have been shown and described, the foregoing contemplates a wide range of modifications, changes and substitutions. In some instances, some disclosed features may be employed without a corresponding use of the other disclosed features. In other instances, the disclosed elements will be combined or arranged based on understanding gained from this disclosure coupled with ordinary skill in the art. Moreover, from the description of exemplary embodiments, equivalents of the elements explicitly shown will suggest themselves to those of skill in the art, and ways of constructing other embodiments will appear to practitioners of the art. Accordingly, it is appropriate that the appended claims be construed broadly.

**Claims**

1.  An oil and gas prospecting method for predicting connectedness between parts of a potential hydrocarbon reservoir identified in a geophysical data volume corresponding to a subsurface region, comprising:

    obtaining a plurality of data elements, respectively corresponding to three-dimensional locations in the subsurface region, and generating a data volume consisting of discrete cells from the plurality of data elements;
    identifying an initial geobody corresponding to a potential hydrocarbon reservoir within the data volume by grouping cells in the data volume according to a selected connectivity criterion;
    selecting a rule that characterizes stratigraphically reasonable geobodies;
    in response to a determination that the initial geobody does not conform to the rule, segmenting the initial geobody into a plurality of fundamental geobodies via processing the data elements with an automated segmentation routine, wherein the fundamental geobodies each conform to the rule; and
    using the fundamental geobodies to predict connectedness between parts of the potential hydrocarbon reservoir.

2.  The method of claim 1, wherein the geophysical data are seismic data or seismic attribute data.

3.  The method of claim 1, further comprising after a determination that the initial geobody does not conform to the rule but before segmenting: selecting a threshold considered to approximate noise levels in the data, then identifying the cells that are responsible for the initial geobody's nonconformance to the selected rule, then adjusting the initial geobody by removing any such cells having data values below the selected noise-related threshold, then repeating the determination of whether the initial geobody, after said adjustment, conforms to the rule.

4.  The method of claim 1, wherein the rule is (i) a lateral bifurcation criterion, whereby a criterion is selected limiting geobody branching in a horizontal dimension, or (ii) the rule is a law of superposition, limiting the extent to which a geobody may overlap itself in the vertical dimension, wherein two cells in a geobody are considered to overlap if they have the same horizontal coordinates and are separated vertically by at least one cell not in the geobody.

5. The method of claim 4, wherein the automated segmentation routine uses a shortest path search algorithm.

6. The method of claim 5, wherein segmenting the initial geobody into a plurality of fundamental geobodies comprises:

(i) identifying all zones of overlapping cells within the initial geobody;
(ii) identifying all cells within the potential geobody where overlap is generated by vertical branching, and designating such cells as barrier cells for shortest path searches in subsequent steps;
(iii) for each pair of cells lying one each in overlapping zones, using a shortest path search algorithm to find the shortest path between the pair of cells, and finding the cell of steepest slope for each shortest path and designating it as a barrier cell;
(iv) repeating step (iii), observing barrier cells, until there are no longer any paths between any overlapping zones; and
(v) segmenting the initial geobody into two or more fundamental geobodies using the designated barrier cells as boundaries.

7. The method of claim 5, wherein the shortest path search algorithm is the $A^*$ algorithm.

8. The method of claim 4, wherein the automated segmentation routine uses a 3D network of boundaries developed by performing statistical clustering analysis on the initial geobody.

9. The method of claim 8, wherein the automated segmentation routine uses a shortest path search algorithm to find shortest paths between pairs of at least partially overlapping clusters within the initial geobody.

10. The method of claim 8, wherein the geophysical data are seismic data or seismic attribute data, and segmenting the initial geobody into a plurality of fundamental geobodies comprises: clustering cells in the potential geobody based on positional data or seismic attribute data or a combination thereof, forming a plurality of non-overlapping clusters which are identified as fundamental geobodies.

11. The method of claim 10, wherein segmenting the initial geobody into a plurality of fundamental geobodies further comprises:

(i) performing statistical clustering using one or more selected spatial or attribute criteria until no individual cluster violates the selected rule for stratigraphic reasonableness;
(ii) identifying number and spatial locations of all clusters using one or more selected connectivity criteria;
(iii) detecting all possible pairs of clusters that do not conform to the selected rule for stratigraphical reasonableness;
(iv) selecting a pair of clusters that do not conform to the rule and applying an $A^*$ shortest path algorithm to identify a shortest path between the selected pair of clusters;
(v) identifying a location of maximum change where the shortest path crosses a boundary between adjacent clusters and designating all cells having the same horizontal coordinates as that location as a barrier cell set throughout the thickness of the initial geobody;
(vi) repeating steps (iv) and (v) until there are no longer any possible paths between the selected pair of clusters;
(vii) repeating steps (iii) through (vi) until there are no longer any cluster pairs that violate the selected rule; and
(vii) segmenting the initial geobody into two or more fundamental geobodies using the designated barrier cells.

12. The method of claim 8, wherein the statistical clustering analysis is k-means clustering, hierarchical divisive clustering, or hierarchical agglomerative clustering.

13. The method of claim 1, further comprising planning development of the potential hydrocarbon reservoir using connectivity assumptions based on the fundamental geobodies.

14. An oil and gas prospecting method for predicting connectedness between parts of a potential hydrocarbon reservoir identified in a geophysical data volume corresponding to a subsurface region, comprising:

(a) obtaining a seismic or seismic attribute data volume of discrete cells, said data volume representing the subsurface region, and identifying an initial geobody corresponding to a potential hydrocarbon reservoir within the data volume by grouping cells in the data volume according to a selected connectivity criterion based on data changes from cell to cell;

(b) in response to a determination that the initial geobody contains vertically overlapping regions, finding the shortest path between a selected pair of vertically overlapping regions;

(c) breaking the shortest path at its steepest vertical gradient by creating barrier cells or by removal of cells from the initial geobody;

(d) repeating (b) and (c) honoring the barriers until no path exists between the selected pair of overlapping regions;

(e) repeating (b) through (d) for all remaining pairs of vertically overlapping regions;

(f) segmenting the initial geobody into fundamental geobodies according to barrier cells and removed cells; and

(g) using the fundamental geobodies to predict connectedness between parts of the potential hydrocarbon reservoir.

15. The method of anyone of claims 1 to 14, further comprising producing hydrocarbons from the subsurface region using the connectedness predictions to plan reservoir development.

16. An oil and gas prospecting method for predicting connectedness between parts of a potential hydrocarbon reservoir identified in a geophysical data volume corresponding to a subsurface region, comprising:

representing the subsurface region as a plurality of voxels;

associating a respective data sample with each of the plurality of voxels;

identifying an initial geobody in the subsurface region via aggregating selected ones of the plurality of voxels;

segmenting the initial geobody into a plurality of fundamental geobodies via hierarchical processing; and

using the fundamental geobodies to predict connectedness between parts of the potential hydrocarbon reservoir.

*Fig. 1*

BEGIN

PERFORM HIERARCHICAL AND STRATIGRAPHICALLY-BASED
SEED DETECTION OF POTENTIAL RESERVOIR BODIES WITHIN
3-D SEISMIC VOLUME(S) — 201

BODIES DETECTED AT FIRST (WIDEST) THRESHOLD — 202

203 — ANY COMPLEX BODIES (SELF OVERLAPPING)? — NO

YES

AUTOMATICALLY REMOVE SMALL OVERLAP REGIONS (NOISE) — 204

205 — ANY COMPLEX BODIES LEFT? — NO

YES

206 — PROCESS LIST OF ALL COMPLEX BODIES
(OPERATIONS PERFORMED ON EACH INDIVIDUAL
BODY IN SEQUENCE

214 — ANY COMPLEX BODIES LEFT? — NO

YES / NEXT BODY

IDENTIFY ALL PAIRS OF OVERLAPPING REGIONS — 207

IDENTIFY ALL PRIMARY BRANCH POINTS IN
COMPLEX BODY WHERE BODY SPLITS VERTICALLY
INTO TWO OR MORE BRANCHES. MARK ALL
BRANCH POINTS AS "BARRIER VOXELS" THAT
PROHIBIT TRANSIT BY SHORTEST PATH ALGORITHM
AND BY SUBSEQUENT SEED DETECTION — 208

209 — PROCESS LIST OF OVERLAPPING REGION PAIRS
(TREAT EACH OVERLAP PAIR IN SEQUENCE)

YES / NEXT PAIR

213 — ANY PAIRS LEFT?

NO

212 — SEED DETECTION TO
GENERATE NEW SEGMENTS

210 — TEST OVERLAP
PAIR FOR CONNECTION USING
A* SEARCH — UNCONNECTED

STILL CONNECTED

211 — PLACE BARRIER VOXELS AT/ALONG
A* PATH AT LOCATION OF MAXIMUM
CHANGE PER USER INPUT CRITERIA

215 — USER REVIEWS AND EDITS
SEGMENTED BODIES USING
3-D VIEWER

216 — CONTINUE HIERARCHICAL SEED DETECTION WITHIN FIRST GENERATION BODIES TO
GENERATE SMALLER, EMBEDDED BODIES AT NARROWER THRESHOLDS

OUTPUT BINARY FILE CONTAINING BODY ID NOS., VOXEL POSITIONS, AND INHERITANCE
TREE LINKING NESTED BODIES THROUGH ALL LEVELS OF THE THRESHOLD HIERARCHY — 217

END

200

*Fig. 2*

STEP 202 OF PROCESS 200

DETECT COMPLEX BODY AT FIRST THRESHOLD

*Fig. 3A*

STEP 208 OF PROCESS 200

DETECT AND "WALL OFF" PRIMARY BRANCH POINTS

*Fig. 3B*

STEP 209 OF PROCESS 200

DETECT ZONES OF AERIAL OVERLAP ON BRANCHES

**Fig. 3C**

STEPS 210 AND 211 OF PROCESS 200

USE A* (SHORTEST PATH) SEARCH TO TRY TO LINK OVERLAPPED AREAS

**Fig. 3D**

STEP 212 OF PROCESS 200

IF OVERLAP AREAS CAN NOT BE CONNECTED, THEN SEED DETECTION AND FORM
NEW SEGMENT

*Fig. 3E*

STEP 211 OF PROCESS 200

DETECT OVERLAPPED AREAS NOT ON PRIMARY BRANCHES, PERFORM A' SEARCH

*Fig. 3F*

STEPS 210 AND 211 OF PROCESS 200

CONTINUE A* SEARCHES AND "WALL BUILDING" UNIT OVERLAP AREA ARE DISCONNECTED

## Fig. 3G

STEP 212 OF PROCESS 200

SEED DETECT AND FORM NEW SEGMENT

## Fig. 3H

400

START

PERFORM HIERARCHICAL AND STRATIGRAPHICALLY-BASED SEED DETECTION OF POTENTIAL RESERVOIR BODIES WITHIN 3D SEISMIC VOLUME(S) 401

BODIES DETECTED AT FIRST (WIDEST) THRESHOLD 402

404

AUTOMATICALLY REMOVE SMALL OVERLAP REGIONS (NOISE)

YES — ARE ANY COMPLEX BODIES (SELF-OVERLAPPING)? 403 — NO

ANY COMPLEX BODIES LEFT? 405 — NO

YES

406

PROCESS LIST OF ALL COMPLEX BODIES (OPERATIONS PERFORMED ON EACH INDIVIDUAL BODIES IN SEQUENCE )

NEXT BODY

YES — 415

ANY COMPLEX BODIES LEFT? — NO

PERFORM HIERARCHICAL CLUSTERING USING CRITERIA PROVIDED BY USER UNTIL NO CLUSTER OVERLAPS ITSELF 407

SEED DETECT TO DETERMINE NUMBER AND POSITION OF CONTIGUOUS INDIVIDUAL CLUSTERS 408

NO — 414

IDENTIFY ALL PAIRS OF OVERLAPPING REGIONS 409

ANY OVERLAP PAIRS LEFT?

PROCESS LIST OF ALL OVERLAPPING REGION PAIRS (TREAT EACH OVERLAP PAIR IN SEQUENCE ) 410

YES — NEXT PAIR

SEED DETECT TO GENERATE NEW SEGMENTS 413

TEST OVERLAP 411 PAIR FOR CONNECTION USING A* SEARCH — NO CONNECTION

STILL CONNECTED

USER REVIEWS AND EDITS SEGMENTED BODIES USING 3D VIEWER 416

PLACE BARRIERS ALONG A* PATH AT CLUSTER BOUNDARY WITH MAXIMUM CHANGE IN USER SPECIFIED ATTRIBUTE 412

CONTINUE HIERARCHICAL SEED DETECTION WITHIN FIRST GENERATION BODIES TO GENERATE SMALLER, EMBEDDED BODIES AT NARROWER THRESHOLDS 417

OUTPUT BINARY FILE CONTAINING BODY ID#'S, VOXEL POSITIONS AND INHERITANCE TREE LINKING NESTED BODIES THROUGH ALL LEVELS OF THE THRESHOLD HIERARCHY 418

END

*Fig. 4*

*Fig. 5*

*Fig. 6*

**Fig. 7**

**Fig. 8**

*Fig. 9*

**Fig. 10**

Generate discrete 3D volume of geophysical data — 1

↓

Identify a geobody corresponding to a potential hydrocarbon reservoir by grouping cells in the data volume according to connectivity criterion. — 2

↓

Select a role that characterizes stratigraphically reasonable geobodies. — 3

↓

Where the geobody does not conform to the rule, segment it into fundamental geobodies that do conform to the rule. — 4

↓

Using the fundamental geobodies, predict connectedness between parts of the potential hydrocarbon reservoir. — 5

*Fig. 11*

Europäisches
Patentamt
European
Patent Office
Office européen
des brevets

# EUROPEAN SEARCH REPORT

Application Number

EP 08 15 5476

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/029715 A (EXXONMOBIL UPSTREAM RES CO [US]) 8 April 2004 (2004-04-08) * page 2, line 28 - page 3, line 19 * * page 10, line 25 - page 11, line 2 * * page 14, line 5 - line 15; claim 1 * ----- | 1,16 | INV. G01V11/00 |
| A | US 2005/111732 A1 (MALLYA YOGISHA [IN] ET AL) 26 May 2005 (2005-05-26) * paragraphs [0004], [0005], [0007], [0023], [0029]; claim 1 * ----- | 1,14,16 | |
| A | SATINDER CHOPRA ET AL.: "seismic attributes-a promising aid for geologic prediction" CSEG RECORDER, [Online] 2006, pages 110-121, XP002508223 Retrieved from the Internet: URL:http://www.arciscorp.com/docs/Seismic_Attributes_Geologic.pdf> [retrieved on 2008-12-15] * page 113 - page 114 * ----- | 1,14,16 | |

**TECHNICAL FIELDS SEARCHED (IPC)**

G01V

The present search report has been drawn up for all claims

| Place of search | Date of completion of the search | Examiner |
|---|---|---|
| The Hague | 14 January 2009 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 15 5476

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2009

| Patent document cited in search report | | Publication date | Patent family member(s) | | Publication date |
|---|---|---|---|---|---|
| WO 2004029715 | A | 08-04-2004 | AU | 2003263015 A1 | 19-04-2004 |
| | | | BR | PI0318292 A | 11-07-2006 |
| | | | CA | 2499948 A1 | 08-04-2004 |
| | | | EP | 1550001 A1 | 06-07-2005 |
| US 2005111732 | A1 | 26-05-2005 | FR | 2862791 A1 | 27-05-2005 |
| | | | JP | 2005161044 A | 23-06-2005 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 5586082 A, Anderson
- US 6823266 B, Marek Czernuszenko et al.
- US 6674689 B, Paul Dunn and Marek Czernuszenko
- US 609057 P, van Wagoner
- US 7024021 B, Paul Dunn and Marek Czernuszenko

## Non-patent literature cited in the description

- **Hart et al.** A Formal Basis for the Heuristic Determination of Minimum Cost Paths. *IEEE Transactions on Systems Science and Cybernetics SSC4,* 1968, vol. 2, 100-107